# EUROPEAN PATENT APPLICATION

(11) **EP 2 712 784 A1**
(43) Date of publication of application: **02.04.2014**
(21) Application number: 13185592.6
(22) Date of filing: 23.09.2013
(51) Int. Cl.: B61F 15/12

(54) **Bearing unit for railway vehicle**

(30) Priority: 28.09.2012 JP 2012215362
(71) Applicant: JTEKT CORPORATION, Osaka-shi Osaka 542-8502 (JP)
(72) Inventor: Fujiwara, Hideki, Osaka-shi,, Osaka 542-8502 (JP)
(74) Representative: Winter, Brandl, Fürniss, Hübner, Röss, Kaiser, Polte - Partnerschaft

(57) **Abstract**

A bearing unit for a railway vehicle, which is disposed in an axle box (2)disposed at each of opposite ends of an axle (3) of a railway vehicle, includes an inner ring (4) secured to the axle; an outer ring (5) disposed outside the inner ring, and secured to the axle box; and rolling elements (6) rollably disposed between the inner ring and the outer ring. A displacement-load sensor (16) is disposed at an inner peripheral surface of the outer ring.

## Description

### BACKGROUND OF THE INVENTION

### 1. Field of the Invention

The present invention relates to a bearing unit for a railway vehicle, and in particular to a bearing unit for a railway vehicle, which includes a sensor.

### 2. Description of Related Art

These days, in a railway vehicle, springs and dampers are provided in bogies disposed in front and rear portions of the railway vehicle in order to reduce vibration or impact that is caused when the railway vehicle passes over a joint between rails or an uneven portion of a rail, or passes over a joint between track slabs, to reduce vibration or the like caused by a lateral force applied by a centrifugal force or an attack angle when the railway vehicle runs in a curved direction, and to maintain the railway vehicle in a constant posture. By performing passive control using the springs and the dampers in response to external inputs received through vehicle wheels, the posture of the railway vehicle is controlled.

In recent years, users' demands for further improving comfortableness in a railway vehicle and for predicting and avoiding a dangerous condition of the railway vehicle have been more and more increased. The conventional passive control using the springs and the dampers is not sufficient for satisfying the users' demands. In particular, the dangerous condition of the railway vehicle cannot be predicted by means of the conventional passive control, and accordingly, means for detecting an operating condition or a posture of the railway vehicle is required in order to detect the dangerous condition of the railway vehicle.

Published Japanese Translation of PCT application No. 2002-542973 (JP 2002-542973 A) discloses a railway axle hub unit including an axle box housing for supporting a bearing, and describes that sensor means for detecting vibration of the hub unit in a substantially vertical direction is provided in order to estimate a kind or a position of a defect in the bearing. JP 2002-542973 A also describes that the sensor means is provided on a static support element firmly secured to the bearing, the sensor means is provided on the static support element at a position perpendicular to the rotary axis of the bearing, and the sensor means includes a temperature sensor in addition to a vibration sensor and a motion sensor. Further, JP 2002-542973 A also describes that the static support element is a sealed annular insert formed of a metal sheet and secured to a static outer bearing ring of the bearing, or the static support element is a bearing housing or a cover member for closing the housing on a vehicle body side.

In the hub unit disclosed in JP 2002-542973 A, the bearing and the sensor means are fitted to the hub unit, separately. Thus, it is difficult to accurately maintain their relative positions. Thus, in order to reduce positional deviation, zero point correction needs to be performed after the both of the bearing and the sensor means are fitted. Thus, assembling operation is complicated.

### SUMMARY OF THE INVENTION

An object of the present invention is to provide a bearing unit for a railway vehicle, in which relative positions of a bearing and sensor means can be accurately maintained without performing zero point correction after the bearing and the sensor means are fitted.

According to an aspect of the present invention, there is provided a bearing unit for a railway vehicle (which will be hereinafter merely referred to as "bearing unit"), the bearing unit being disposed in an axle box disposed at each of opposite ends of an axle of a railway vehicle. The bearing unit includes an inner ring secured to the axle; an outer ring disposed outside the inner ring, and secured to the axle box; and rolling elements rollably disposed between the inner ring and the outer ring. A displacement-load sensor is disposed at an inner peripheral surface of the outer ring.

### BRIEF DESCRIPTION OF THE DRAWINGS

The foregoing and further features and advantages of the invention will become apparent from the following description of example embodiments with reference to the accompanying drawing, wherein like numerals are used to represent like elements and wherein:

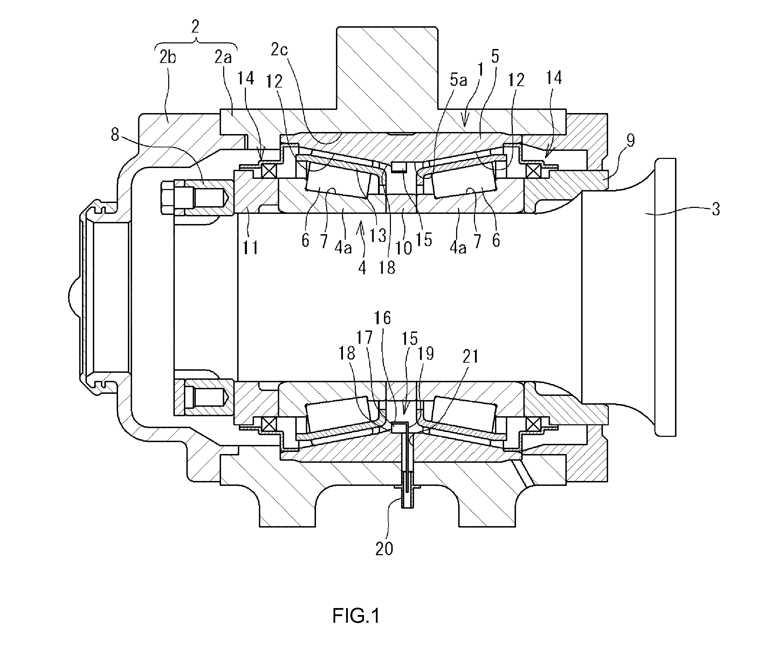

FIG. 1 is a sectional view for illustrating an axle box in which a bearing unit according to an embodiment of the present invention is accommodated.

### DETAILED DESCRIPTION OF EMBODIMENTS

A bearing unit according to an embodiment of the present invention will be described in detail with reference to the accompanying drawing. FIG. 1 is a sectional view for illustrating an axle box 2 in which a bearing unit 1 according to the embodiment of the present invention is accommodated.

The bearing unit 1 is disposed in the axle box 2 that is disposed at each of opposite ends of an axle 3 of a railway vehicle. The axle box 2 is secured to, for example, a frame of a bogie (not shown) on which the railway vehicle is provided. The axle box 2 is formed by an axle box body 2a and a cover 2b. The axle box body 2a has a cylindrical shape. The cover 2b closes one of end openings of the axle box body 2a. An end portion of the axle 3 is inserted in the other of the end openings of the axle box 2.

The bearing unit 1 includes an inner ring 4, an outer ring 5 and tapered rollers 6 as rolling elements. The inner ring 4 is secured to the end portion of the axle 3. The inner ring 4 is formed by paired inner ring constituent members 4a that are spaced from each other at a predetermined interval along an axial direction of the axle 3, and that are secured to the axle 3. Inner ring raceway surfaces 7, on which the tapered rollers 6 roll, are formed respectively in outer peripheral surfaces of the inner ring constituent members 4a. The inner ring 4 is held between a front lid 8 located on an axle end side (left side in FIG. 1) and a rear lid 9 located on an opposite axle end side (right side in FIG. 1). An inner ring spacer 10 is disposed between the paired inner ring constituent members 4a. An oil thrower 11 is disposed between the front lid 8 and the inner ring constituent member 4a on the axle end side.

The outer ring 5 is disposed outside the inner ring 4, and is secured to an inner peripheral surface 2c of the axle box body 2a. Outer ring raceway surfaces 12, which face the respective inner ring raceway surfaces 7 of the inner ring 4, are formed in an inner peripheral surface 5a of the outer ring 5. The outer ring 5 in this embodiment is an outer ring with double raceway in which the outer ring raceway surfaces 12 in two rows are formed in the inner peripheral surface 5a of the outer ring 5.

The tapered rollers 6 are rollably disposed in two rows (double row) between the outer ring raceway surfaces 12 of the outer ring 5 and the inner ring raceway surfaces 7 of the inner ring 4. The tapered rollers 6 in each row are retained at predetermined intervals in a circumferential direction by a cage 13. Seals 14 for sealing an annular space formed between the inner ring 4 and the outer ring 5 are disposed respectively in opposite axial end portions of the outer ring 5.

A sensor assembly 15 is provided at the inner peripheral surface 5a of the outer ring 5. More specifically, the sensor assembly 15 is provided at a portion of the inner peripheral surface 5a, the portion being located between one of the outer ring raceway surfaces 12 and the other of the outer ring raceway surfaces 12. The sensor assembly 15 includes displacement-load sensors. The sensor assembly 15 is formed by a belt-shaped sheet sensor 16 and a positioning ring 17. The displacement-load sensors are disposed on the belt-shaped sheet sensor 16 at predetermined intervals along a longitudinal direction of the belt-shaped sheet sensor 16. The belt-shaped sheet sensor 16 is deformed so as to have a ring shape, and is fitted in the positioning ring 17. The belt-shaped sheet sensor 16 is secured to the positioning ring 17 by bolts (not shown). The assembled sensor assembly 15 is fixed at a predetermined position by using a stepped portion 18 that is formed in the inner peripheral surface 5a of the outer ring 5. It is to be noted that reference numeral 19 in FIG. 1 denotes a lead-out line, and reference numeral 20 denotes a connector that is screwed into a screw hole 21 formed in the axle box body 2a, in order to connect the lead-out line 19 to an external cord.

In this embodiment, the displacement-load sensors are disposed at four positions that are set at intervals of 90 degrees in a circumferential direction of the inner peripheral surface 5a of the outer ring 5, the four positions being upper and lower positions in the outer ring 5 (upper and lower positions in FIG. 1), and front and rear positions in the outer ring 5 with respect to a travelling direction of the railway vehicle (a direction perpendicular to a plane of paper of FIG. 1). The displacement-load sensors are fixed at predetermined positions in the inner peripheral surface 5a of the outer ring 5 by the positioning ring 17 as described above. That is, the displacement/load sensors are provided integrally with the outer ring 5 that is a constituent element of the bearing unit 1.

The sensor assembly 15 detects a relative displacement between the outer ring 5 and the axle 3. Stresses (a stress acting in the axial direction of the axle 3, a stress acting in the travelling direction of the railway vehicle, a stress acting in a vertical direction of the railway vehicle and moment around an axis perpendicular to the traveling direction of the railway vehicle) are obtained based on the detected displacement amount. A condition (posture) of the axle 3 and a load acting on the axle 3 can be estimated based on the displacement amount and stresses. By obtaining the posture of the axle 3 and load acting on the axle 3, it is possible to estimate whether the railway vehicle is in a dangerous condition. For example, by fitting an actuator to the bogie of the railway vehicle, the posture of the railway vehicle or the bogie can be controlled through active-control using the actuator, in accordance with the estimated posture of the axle 3 and the estimated load acting on the axle 3.

In this embodiment, the sensor assembly 15 is disposed in the outer ring 5 secured to the inner peripheral surface of the axle box that is a static portion nearest to a rail. Thus, a variation in the posture of the railway vehicle can be promptly determined based on the displacement of the axle 3.

It is to be noted that the embodiment disclosed in this specification is to be considered in all respects exemplary and illustrative and not restrictive. The scope of the invention should not be defined by the above-mentioned embodiment, but should be indicated by the appended claims, and all changes and modifications which come within the meaning and range of equivalency of the appended claims are therefore to be embraced therein.

For example, in the above-described embodiment, the tapered roller bearing, in which tapered rollers are used as rolling elements rollably disposed between the inner ring and the outer ring, has been described. However, the bearing unit according to the present invention should not be limited to this tapered roller bearing, and another bearing, such as a cylindrical roller bearing, may be employed. Further, the number of the displacement-load sensors should not be limited to four. The number of the displacement-load sensors may be equal to or smaller than three, or may be equal to or larger than five, depending on a subject for measurement.

In the bearing unit according to the present invention, the displacement-load sensors are disposed at the inner peripheral surface of the outer ring that is a constituent element of the bearing unit. That is, the bearing unit, in which the displacement-load sensors are sub-assembled, is fitted to the end portion of the axle, and accordingly, the relative positions of the bearing unit and the displacement-load sensors can be accurately maintained without performing zero point correction after the bearing unit and the displacement-load sensors are fitted.

## Claims

1. A bearing unit for a railway vehicle, the bearing unit being disposed in an axle box disposed at each of opposite ends of an axle of a railway vehicle, and the bearing unit comprising:
an inner ring secured to the axle;
an outer ring disposed outside the inner ring, and secured to the axle box; and
rolling elements rollably disposed between the inner ring and the outer ring,
wherein a displacement-load sensor is disposed at an inner peripheral surface of the outer ring.

2. The bearing unit according to claim 1, wherein the rolling elements are tapered rollers disposed in a double row, and the displacement-load sensor is disposed at a portion of the inner peripheral surface of the outer ring, the portion being located between the double row of the tapered rollers in an axial direction of the axle.

3. The bearing unit according to claim 1 or 2, wherein the displacement-load sensor is disposed at each of four positions that are set at intervals of 90 degrees in a circumferential direction of the inner peripheral surface of the outer ring, the four positions being upper and lower positions in the outer ring, and front and rear positions in the outer ring with respect to a traveling direction of the railway vehicle.
